# EUROPEAN PATENT APPLICATION

(11) **EP 4 050 378 A1**
(43) Date of publication of application: **31.08.2022**
(21) Application number: 21793582.4
(22) Date of filing: 20.02.2021
(51) Int. Cl.: G01S 17/931, G05D 1/02, G06K 9/00

(54) **OBSTACLE IDENTIFICATION METHOD AND APPARATUS, SELF-MOVING DEVICE AND STORAGE MEDIUM**

(30) Priority: 22.04.2020 CN 202010322554
(71) Applicant: Dreame Innovation Technology (Suzhou) Co., Ltd., Suzhou, Jiangsu 215104 (CN)
(72) Inventor: SUN, Jiajia, Suzhou, Jiangsu 215104 (CN); XU, Yinbo, Suzhou, Jiangsu 215104 (CN)
(74) Representative: dompatent von Kreisler Selting Werner - Partnerschaft von Patent- und Rechtsanwälten mbB
(86) International application number: PCT/CN2021/076964
(87) International publication number: WO 2021/212986

(57) **Abstract**

The present application relates to the technical field of computers, and relates to an obstacle identification method and apparatus, a self-moving device, and a storage medium. The method comprises: acquiring an environmental image sent by an image acquisition assembly; determining contour information of an object acted on by a line laser by using pixel coordinates of reflected light in the environmental image; and when a contour indicated by the contour information is the contour of an obstacle, determining that the object acted on by the line laser is the obstacle. Since a first line laser transmitter and the image acquisition assembly are jointly used to acquire environmental images, the image acquisition assembly may still collect an image of reflected light of the line laser even when there is relatively little ambient light. Therefore, it may be ensured that obstacles may be identified even when there is relatively little ambient light.

## Description

### TECHNICAL FIELD

The present application relates to an obstacle identification method, an apparatus, a self-moving device and a storage medium, which belongs to a field of computer technology.

### BACKGROUND

With continuous development of intelligence, self-moving devices (i.e., sweeping robots, smart lawn mowers, etc.) are capable of automatically identifying whether there is any obstacle in front of them so as to adopt obstacle avoidance strategies.

Obstacle identification methods in the related art include identifying obstacles in images through image identification algorithms.

However, when identifying the obstacle through the image identification algorithms, if ambient light is weak, the result of the image identification will be affected, which may cause problems where the obstacle cannot be identified.

### SUMMARY

The present application provides an obstacle identification method, an apparatus, a self-moving device and a storage medium, which can improve the obstacle identification result.

In a first aspect, an obstacle identification method of an embodiment of the present application is provided, the obstacle identification method is used in a self-moving device on which a first line laser emitter and an image acquisition component are installed; the first line laser emitter is adapted to emit line laser obliquely and downwardly along a moving direction; the image acquisition component is adapted to collect an environmental image including reflected light obtained by the line laser reflected by an object; the method comprises:
acquiring the environment image sent by the image acquisition component;
using pixel coordinates of the reflected light in the environment image to determine contour information of the object acted on by the line laser; and
determining that the object acted on by the line laser is an obstacle when a contour indicated by the contour information is an obstacle contour.

In a possible embodiment, after determining that the object acted on by the line laser is the obstacle, the method further comprises:
determining a vertical distance of the obstacle relative to the ground according to the contour information.

In a possible embodiment, determining the vertical distance of the obstacle relative to the ground according to the contour information comprises:
acquiring a first vertical distance between the ground and the first line laser emitter;
determining a second vertical distance between the object acted on by the line laser and the first line laser emitter based on a principle of laser ranging and the pixel coordinates of the contour information; and
determining a difference between the second vertical distance and the first vertical distance as the vertical distance.

In a possible embodiment, acquiring the first vertical distance between the ground and the first line laser emitter comprises:
for historical environmental images collected in history and the vertical distance of the object acted on by the line laser with respect to the ground is less than or equal to a preset distance threshold, based on the principle of laser ranging and the pixel coordinates of the reflected light in the historical environment images, determining a vertical distance between the object and the first line laser emitter so as to obtain the first vertical distance.

In a possible embodiment, a second line laser emitter is further provided on the self-moving device, the second line laser emitter is used to emit other line laser, an emission direction of the other line laser is different from an emission direction of the line laser, and the environmental image also includes reflected light obtained by reflecting the other line laser by the object.

In a possible embodiment, after determining that the object acted on by the line laser is the obstacle, the method further comprises:
determining a working strategy of the self-moving device based on a type of the obstacle, and the working strategy is used to avoid or surpass the obstacle.

In a possible embodiment, determining the working strategy of the self-moving device based on the type of the obstacle comprises:
when the obstacle is a carpet, and a vertical distance of the carpet with respect to the ground is greater than a first threshold and less than a second threshold, determining that the working strategy of the self-moving device is to speed up driving so as to surpass the obstacle;
when the obstacle is the carpet, and the vertical distance of the carpet with respect to the ground is greater than or equal to the second threshold, determining that the working strategy of the self-moving device is to change the moving direction so as to avoid the obstacle;
when the obstacle is a step, the step is below the ground and a maximum vertical distance to the ground is greater than a third threshold and less than a fourth threshold, determining that the working strategy of the self-moving device is to drive at a reduced speed so as to lower to a height corresponding to the step; and
when the obstacle is the step, the step is below the ground and the maximum vertical distance to the ground is greater than or equal to the fourth threshold, determining that the working strategy of the self-moving device is to change the moving direction so as to avoid the obstacle.

In a possible embodiment, after using pixel coordinates of the reflected light in the environment image to determine the contour information of the object acted on by the line laser, it further includes: determining the number of protrusions of a contour shape in the contour information;
when the number of the protrusions is greater than a number threshold, and when the contour indicated by the contour information is determined as an obstacle contour by using a non-image identification algorithm, it is determined that the object acted by the line laser is an obstacle; and when the number of the protrusions is less than or equal to the number threshold, it is determined that the contour indicated by the contour information is not an obstacle contour.

In a possible embodiment, when the line laser hits a flat ground, a ground information extracted from the environmental image captured by the image acquisition component is flat and smooth; and when the obstacle is a carpet and the line laser hits the carpet, a ground information extracted from the environmental image captured by the image acquisition component is irregular data with noise.

In a second aspect, an obstacle identification apparatus of an embodiment of the present application is provided, the obstacle identification apparatus is used in a self-moving device on which a first line laser emitter and an image acquisition component are installed; the first line laser emitter is adapted to emit line laser obliquely and downwardly along a moving direction; the image acquisition component is adapted to collect an environmental image including reflected light obtained by the line laser reflected by an object; the apparatus comprises:
an image acquisition module adapted to acquire the environment image sent by the image acquisition component;
a contour determination module adapted to use pixel coordinates of the reflected light in the environmental image to determine contour information of the object acted on by the line laser; and
an object identification module adapted to determine that the object acted on by the line laser is an obstacle when a contour indicated by the contour information is an obstacle contour.

In a third aspect, an obstacle identification apparatus of an embodiment of the present application is provided, wherein the apparatus comprises a processor and a memory; a program is stored in the memory, and the program is loaded and executed by the processor to realize an obstacle identification method according to the first aspect.

In a fourth aspect, a computer-readable storage medium of an embodiment of the present application is provided, wherein a program is stored in the storage medium; and wherein when the program is executed by the processor, it is used to implement an obstacle identification method according to the first aspect.

In a fifth aspect, an embodiment of the present application provides a self-moving device. The self-moving device includes a shell, a first line laser emitter, an image acquisition component and a control component. The first line laser emitter is disposed on the shell, and is adapted to emit line laser obliquely and downwardly along a moving direction. The image acquisition component is adapted to collect an environmental image including reflected light obtained by the line laser reflected by an object. The first line laser emitter and the image acquisition component are respectively connected in communication with the control component. The control component is adapted to:
acquire the environment image sent by the image acquisition component;
use pixel coordinates of the reflected light in the environment image to determine contour information of the object acted on by the line laser; and
determine that the object acted on by the line laser is an obstacle when a contour indicated by the contour information is an obstacle contour.

In a possible embodiment, the self-moving device further includes a second line laser emitter. The second line laser emitter is adapted to emit another line laser. An emission direction of the another line laser is different from an emission direction of the line laser. The environmental image also includes reflected light obtained by the another line laser reflected by the object.

Beneficial effects of the present application include: by installing the first line laser emitter and the image acquisition component on the self-moving device; by using the first line laser emitter to emit a line laser obliquely and downwardly along the moving direction; by using the image acquisition component to acquire the environmental image including reflected light obtained by the line laser reflected by the object; by acquiring the environmental image sent by the image acquisition component; by using the pixel coordinates of the reflected light in the environment image to determine the contour information of the object acted on by the line laser; by determining that the object acted on by the line laser is an obstacle when the contour indicated by the contour information is an obstacle contour; the present application can solve the problem that the existing obstacle identification method is susceptible to the influence of ambient light, resulting in inaccurate identification results. Since the first line laser emitter and the image acquisition component are used to jointly realize the collection of the environmental image, the image collection component can still collect the image of the reflected light of the line laser even when the ambient light is dark. Therefore, it can be ensured that obstacles can still be identified even when the ambient light is dark. In addition, by extracting object contour information based on the pixel coordinates of the reflected light of the line laser, and identifying obstacles based on the contour information, instead of using image identification algorithms to identify obstacles, equipment resources consumed when identifying obstacles can be saved.

The above description is only an overview of the technical solutions of the present application. In order to be able to understand the technical solutions of the present application more clearly and implement them in accordance with the content of the specification, the preferred embodiments of the present application are described in detail below in conjunction with the accompanying drawings.

### BRIEF DESCRIPTION OF DRAWINGS

FIG. 1 is a schematic structural view of a self-moving device in accordance with an embodiment of the present application;
FIG. 2 is a flowchart of an obstacle identification method in accordance with an embodiment of the present application;
FIG. 3 is a schematic view of a scene of identifying obstacles in accordance with an embodiment of the present application;
FIG. 4 is a block diagram of an obstacle identification apparatus in accordance with an embodiment of the present application; and
FIG. 5 is a block diagram of an obstacle identification apparatus in accordance with an embodiment of the present application.

### DETAILED DESCRIPTION

Specific embodiments of the present application will be described in further detail below in conjunction with the accompanying drawings and implementations. The following embodiments are used to illustrate the present application, but are not used to limit the scope of the present application.

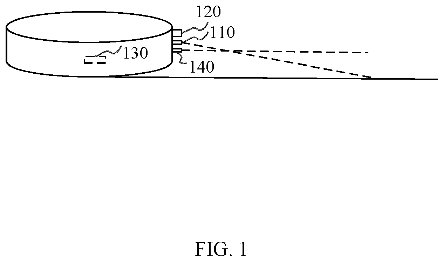

FIG. 1 is a schematic structural view of a self-moving device in accordance with an embodiment of the present application. The self-moving device refers to a device which is movable without human exertion. The self-moving device includes but not limited to a sweeping robot, a smart lawn mower etc., which is not limited by the present application. As shown in FIG. 1, the self-moving device at least includes a first line laser emitter 110, an image acquisition component 120 and a control component 130.

The first line laser emitter 110 is disposed on a shell of the self-moving device, and is used to emit line laser obliquely and downwardly along a moving direction. The number of the first line laser emitter 110 may be one or more, which is not limited by the embodiments of the present application.

An angle extending obliquely and downwardly along the moving direction with respect to a horizontal direction may be 15°, 30°, 45°, etc. The value of the angle in the present embodiments is not limited to the values mentioned above.

The image acquisition component 120 is adapted to acquire an environment image including reflected light obtained by the line laser reflected by an object. In a possible embodiment, the image acquisition component 120 is a camera, a video camera, etc., which is not limited by the embodiments of the present application.

The first line laser emitter 110 and the image acquisition component 120 are respectively communicated with the control component 130. The control component 130 controls the working sequence of the first line laser emitter 110 and the image acquisition component 120. In a possible embodiment, the control component 130 controls the first line laser emitter 110 to start working before the image acquisition component 120.

In the present application, the control component 130 is also adapted to: acquire the environment image sent by the image acquisition component 120; use the pixel coordinates of the reflected light in the environment image to determine the contour information of the object acted on by the line laser; and determining that the object acted on by the line laser is an obstacle when the contour indicated by the contour information is an obstacle contour.

In a possible embodiment, the contour information includes the shape and position of the contour.

In a possible embodiment, a second line laser emitter 140 is also provided on the self-moving device. The second line laser emitter 140 is adapted to emit other line laser. An emission direction of the other line laser is different from an emission direction of the line laser emitted by the first line laser emitter 110. The environmental image also includes the reflected light of the other line laser reflected by the object. At this time, the reflected light of other line laser can assist the self-moving device to determine whether there is an obstacle.

Since the first line laser emitter and the image acquisition component are used to jointly realize the collection of the environmental image, the image collection component can still collect the image of the reflected light of the line laser even when the ambient light is dark. Therefore, the self-moving device of the present application can be ensured that obstacles can still be identified even when the ambient light is dark.

In addition, by extracting object contour information based on the pixel coordinates of the reflected light of the line laser, and identifying obstacles based on the contour information, instead of using image identification algorithms to identify obstacles, equipment resources consumed when identifying obstacles can be saved.

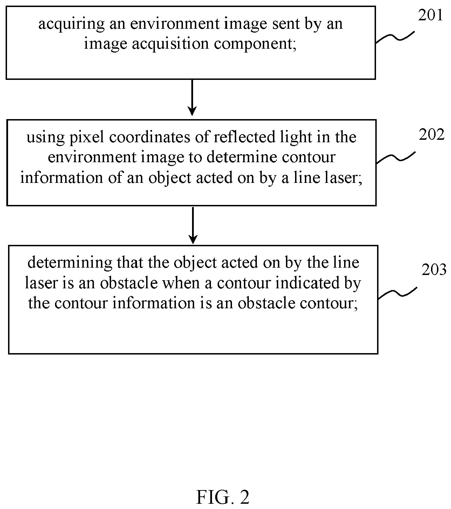

FIG. 2 is a flowchart of an obstacle identification method in accordance with an embodiment of the present application. In this embodiment, the method is applied to the self-moving device shown in FIG. 1 and the execution subject of each step is the control component 130 in the self-moving device as an example for description. The method includes at least the following steps:
step 201: acquiring the environment image sent by the image acquisition component;

The environment image includes the reflected light obtained by reflecting the line laser emitted by the first line laser emitter by the object.

In a possible embodiment, a second line laser emitter is also provided on the self-moving device. The second line laser emitter is adapted to emit other line laser. An emission direction of other line laser is different from an emission direction of line laser. The environmental image also includes the reflected light from other line laser reflected by the object. At this time, the environmental image also includes the reflected light from other line laser reflected by the object.
step 202: using the pixel coordinates of the reflected light in the environment image to determine the contour information of the object acted on by the line laser;

The contour information includes but is not limited to the shape and position of the contour.

If there is no obstacle in the moving direction of the self-moving device, the contour information of the object should be flat and smooth; and if there is an obstacle in the moving direction, the contour information of the object is usually uneven. Based on this, the self-moving device is capable of determining whether there is an obstacle in the moving direction through the contour information.

In a possible embodiment, the self-moving device connects the pixel coordinates of the reflected light so as to obtain the contour information of the object.
step 203: determining that the object acted on by the line laser is an obstacle, when the contour indicated by the contour information is the contour of an obstacle.

In a possible embodiment, the self-moving device compares the contour shape in the contour information with the template shape. If the contour shape matches the template shape, the contour indicated by the contour information is an obstacle contour. If the contour shape does not match the template shape, the contour indicated by the contour information is not an obstacle contour.

Among them, the template shape includes contour shapes of each obstacle, such as a contour shape of a carpet; or a contour shape of a step; or a contour shape of a wardrobe etc.

And/or, the number of protrusions in the contour shape is determined by the self-moving device. When the number of protrusions is greater than a number threshold, it is determined that the contour indicated by the contour information is an obstacle contour. When the number of protrusions is less than or equal to the number threshold, it is determined that the contour indicated by the contour information is not an obstacle contour.

Of course, the self-moving device may also use other methods to determine whether the contour indicated by the contour information is an obstacle contour, which is not listed here in the present embodiments.

In a possible embodiment, after determining that the object acted on by the line laser is an obstacle, the self-moving device may also determine a vertical distance of the obstacle relative to the ground according to the contour information.

In an illustrated embodiment, determining the vertical distance of the obstacle relative to the ground according to the contour information includes: acquiring a first vertical distance between the ground and the first line laser emitter; determining a second vertical distance between the object acted on by the line laser and the first line laser emitter based on the principle of laser ranging and the pixel coordinates of the contour information; and determining the difference between the second vertical distance and the first vertical distance as the vertical distance.

Since the control component is based on the laser ranging principle and the pixel coordinates of the reflected light, a distance between the first line laser emitter and the object can be measured, and the emission angle of the line laser is pre-stored in the self-moving device. Based on the distance between the first line laser emitter and the object, and the emission angle, the second vertical distance between the object and the first line laser emitter can be determined.

Acquiring the first vertical distance between the ground and the first line laser emitter includes: for historical environmental images collected in history and the vertical distance of the object acted on by the line laser with respect to the ground is less than or equal to a preset distance threshold, based on the principle of laser ranging and the pixel coordinates of the reflected light in the historical environment images, determining a vertical distance between the object and the first line laser emitter so as to obtain the first vertical distance. Since the vertical distance of the object acted on by the line laser relative to the ground is less than or equal to the preset distance threshold, it indicates that the object acted on by the line laser in the historical environment images is not an obstacle. At this time, the object is the earth by default.

In a possible embodiment, determining the second vertical distance between the object acted on by the line laser and the first line laser emitter includes: determining the vertical distance and the minimum vertical distance between the object acted on by the line laser and the first line laser emitter, based on the principle of laser ranging and the pixel coordinates of the reflected light in the environmental image; and determining the average value between the vertical distance and the minimum vertical distance as the second vertical distance. Of course, the second vertical distance may also be the vertical distance, and the present embodiment does not limit the arrangement of the second vertical distance.

When the line laser hits a flat ground, in the image captured by the image acquisition component, the ground information extracted is flat and smooth. At this time, the first vertical distance H1 of the ground relative to the first line laser emitter can be estimated.

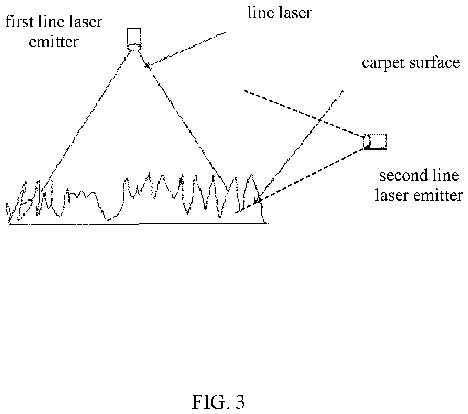

Referring to FIG. 3, when the line laser hits a carpet, due to the edge characteristics of the carpet, the extracted ground information is irregular data with noise. At this time, the second vertical distance H2 of the carpet relative to the first line laser emitter can be estimated. When the carpet is detected, the vertical distance of the carpet (H2-H1) can be estimated according to the first vertical distance H1 detected in the moving direction of the self-moving device.

When the self-moving device also includes the second-line laser emitter, referring to FIG. 3, when other line laser emitted by the second line laser emitter hits the carpet, due to the edge characteristics of the carpet, the extracted ground information is irregular with noise data. At this time, the reflected light from other line laser emitted by the carpet assists in determining the vertical distance of the carpet from the self-moving device.

In summary, by installing the first line laser emitter and the image acquisition component on the self-moving device; by using the first line laser emitter to emit a line laser obliquely and downwardly along the moving direction; by using the image acquisition component to acquire the environmental image including reflected light obtained by the line laser reflected by the object; by acquiring the environmental image sent by the image acquisition component; by using the pixel coordinates of the reflected light in the environment image to determine the contour information of the object acted on by the line laser; by determining that the object acted on by the line laser is an obstacle when the contour indicated by the contour information is an obstacle contour; the obstacle identification method provide by the present application can solve the problem that the existing obstacle identification method is susceptible to the influence of ambient light, resulting in inaccurate identification results. Since the first line laser emitter and the image acquisition component are used to jointly realize the collection of the environmental image, the image collection component can still collect the image of the reflected light of the line laser even when the ambient light is dark. Therefore, it can be ensured that obstacles can still be identified even when the ambient light is dark. In addition, by extracting object contour information based on the pixel coordinates of the reflected light of the line laser, and identifying obstacles based on the contour information, instead of using image identification algorithms to identify obstacles, equipment resources consumed when identifying obstacles can be saved.

In a possible embodiment, after the step 203, the self-moving device may also determine the work strategy of the self-moving device based on the types of the obstacles. The work strategy is used to avoid or surpass the obstacles.

In an embodiment, when the obstacle is a carpet, and a vertical distance of the carpet with respect to the ground is greater than a first threshold and less than a second threshold, determining that the working strategy of the self-moving device is to speed up driving so as to get over the obstacle; when the obstacle is the carpet, and the vertical distance of the carpet with respect to the ground is greater than or equal to the second threshold, determining that the working strategy of the self-moving device is to change the moving direction so as to avoid the obstacle; when the obstacle is a step, the step is below the ground and a maximum vertical distance to the ground is greater than a third threshold and less than a fourth threshold, determining that the working strategy of the self-moving device is to drive at a reduced speed so as to lower to a height corresponding to the step; and when the obstacle is the step, the step is below the ground and the maximum vertical distance to the ground is greater than or equal to the fourth threshold, determining that the working strategy of the self-moving device is to change the moving direction so as to avoid the obstacle.

The second threshold is greater than the first threshold, and the present embodiment does not limit the value of the first threshold and the value of the second threshold.

The fourth threshold is greater than the third threshold, and the present embodiment does not limit the value of the third threshold and the value of the fourth threshold.

In this embodiment, by adopting different working strategies based on the different vertical distances of the obstacle relative to the ground, it can be ensured that the self-moving device will not get stuck on the obstacle or fall from a height, thereby affecting the service life of the self-moving device.

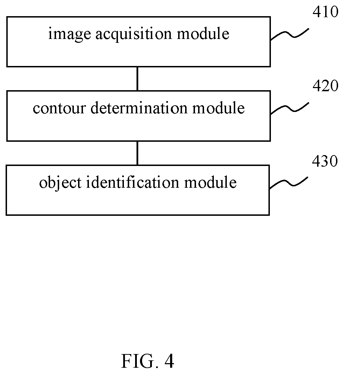

FIG. 4 is a block diagram of an obstacle identification apparatus in accordance with an embodiment of the present application. In this embodiment, the apparatus is applied to the self-moving device shown in FIG. 1 as an example for description. The apparatus includes at least the following modules: an image acquisition module 410, a contour determination module 420, and an object identification module 430.

The image acquisition module 410 is adapted to acquire the environment image sent by the image acquisition component.

The contour determination module 420 is adapted to use the pixel coordinates of the reflected light in the environment images to determine the contour information of the object acted on by the line laser.

The object identification module 430 is adapted to determine that the object acted on by the line laser is an obstacle when the contour indicated by the contour information is an obstacle contour.

For related details, refer to the above method embodiment.

It should be noted that when the obstacle identification apparatus provided in the foregoing embodiment performs obstacle identification, only the division of the foregoing functional modules is used for illustration. In practical applications, the above-mentioned functions can be allocated by different functional modules as required. That is, the internal structure of the obstacle identification apparatus is divided into different functional modules in order to complete all or part of the functions described above. In addition, the embodiment of the obstacle identification apparatus and the embodiment of the obstacle identification method belong to the same concept, and the specific implementation processes have been described in detail in the method embodiment, which will not be repeated here.

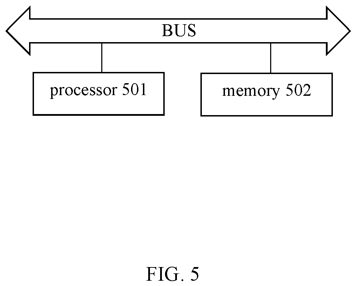

FIG. 5 is a block diagram of an obstacle identification apparatus in accordance with an embodiment of the present application. The apparatus may be a self-moving device as shown in FIG. 1. The apparatus at least includes a processor 501 and a memory 502.

The processor 501 may include one or more processing cores, such as a 4-core processor, an 8-core processor etc. The processor 501 may be implemented in at least one hardware form among DSP (Digital Signal Processing), FPGA (Field-Programmable Gate Array), and PLA (Programmable Logic Array). The processor 501 may also include a main processor and a coprocessor. The main processor is a processor used to process data in the awake state, which is also called a CPU (Central Processing Unit). The coprocessor is a low-power processor used to process data in the standby state. In some embodiments, the processor 501 may be integrated with a GPU (Graphics Processing Unit). The GPU is used to render and draw the content that needs to be displayed on the display screen. In some embodiments, the processor 501 may further include an AI (Artificial Intelligence) processor. The AI processor is used to process computing operations related to machine learning.

The memory 502 may include one or more computer-readable storage media. The computer-readable storage medium may be non-transitory. The memory 502 may also include a high-speed random access memory and a non-volatile memory, such as one or more magnetic disk storage devices and flash memory storage devices. In some embodiments, the non-transitory computer-readable storage medium in the memory 502 is used to store at least one instruction. The at least one instruction is used to be executed by the processor 501 to implement the obstacle identification method provided in the method embodiment of the present application.

In some embodiments, the obstacle identification apparatus may alternatively further include: a peripheral device interface and at least one peripheral device. The processor 501, the memory 502 and the peripheral device interface may be communicated by a BUS or a signal line. Each peripheral device can be communicated with the peripheral device interface through the BUS, the signal line or a circuit board. Illustratively, the peripheral device includes but not limited to: a radio frequency circuit, an image capture component, a line laser emitter, an audio circuit, and a power supply etc.

Of course, the obstacle identification apparatus may also include fewer or more components, which is not limited in the present embodiments.

In a possible embodiment, the present application also provides a computer-readable storage medium. The computer-readable storage medium stores a program. The program is loaded and executed by the processor to implement the obstacle identification method of the foregoing method embodiment.

In a possible embodiment, the present application also provides a computer product. The computer product includes a computer-readable storage medium. The computer-readable storage medium stores a program. The program is loaded and executed by the processor to implement the obstacle identification method of the foregoing method embodiment.

The technical features of the above-mentioned embodiments can be combined arbitrarily. In order to make the description concise, not all possible combinations of the various technical features in the foregoing embodiments have been described. However, as long as there is no conflict in combination of these technical features, it should be regarded as the scope described in this specification.

The above-mentioned embodiments only express several embodiments of the present application, and the description is relatively specific and detailed, but it should not be understood as a limitation on the scope of the present application. It should be pointed out that for those of ordinary skill in the art, without departing from the concept of the present application, several modifications and improvements can be made, and these all fall within the protection scope of the present application. Therefore, the protection scope of the disclosed patent should be subject to the appended claims.

## Claims

1. An obstacle identification method, the obstacle identification method being used in a self-moving device on which a first line laser emitter and an image acquisition component are installed; the first line laser emitter being adapted to emit line laser obliquely and downwardly along a moving direction; the image acquisition component being adapted to collect an environmental image including reflected light obtained by the line laser reflected by an object; the method comprising:
acquiring the environment image sent by the image acquisition component;
using pixel coordinates of the reflected light in the environment image to determine contour information of the object acted on by the line laser; and
determining that the object acted on by the line laser is an obstacle when a contour indicated by the contour information is an obstacle contour.

2. The method according to claim 1, wherein after determining that the object acted on by the line laser is the obstacle, the method further comprises:
determining a vertical distance of the obstacle relative to the ground according to the contour information.

3. The method according to claim 2, wherein determining the vertical distance of the obstacle relative to the ground according to the contour information comprises:
acquiring a first vertical distance between the ground and the first line laser emitter;
determining a second vertical distance between the object acted on by the line laser and the first line laser emitter based on a principle of laser ranging and the pixel coordinates of the contour information; and
determining a difference between the second vertical distance and the first vertical distance as the vertical distance.

4. The method according to claim 3, wherein acquiring the first vertical distance between the ground and the first line laser emitter comprises:
for historical environmental images collected in history and the vertical distance of the object acted on by the line laser with respect to the ground is less than or equal to a preset distance threshold, based on the principle of laser ranging and the pixel coordinates of the reflected light in the historical environment images, determining a vertical distance between the object and the first line laser emitter so as to obtain the first vertical distance.

5. The method according to claim 1, wherein a second line laser emitter is further provided on the self-moving device, the second line laser emitter is used to emit other line laser, an emission direction of the other line laser is different from an emission direction of the line laser, and the environmental image also includes reflected light obtained by reflecting the other line laser by the object.

6. The method according to any one of claims 1 to 5, wherein after determining that the object acted on by the line laser is the obstacle, the method further comprises:
determining a working strategy of the self-moving device based on a type of the obstacle, and the working strategy is used to avoid or surpass the obstacle.

7. The method according to claim 6, wherein determining the working strategy of the self-moving device based on the type of the obstacle comprises:
when the obstacle is a carpet, and a vertical distance of the carpet with respect to the ground is greater than a first threshold and less than a second threshold, determining that the working strategy of the self-moving device is to speed up driving so as to surpass the obstacle;
when the obstacle is the carpet, and the vertical distance of the carpet with respect to the ground is greater than or equal to the second threshold, determining that the working strategy of the self-moving device is to change the moving direction so as to avoid the obstacle;
when the obstacle is a step, the step is below the ground and a maximum vertical distance to the ground is greater than a third threshold and less than a fourth threshold, determining that the working strategy of the self-moving device is to drive at a reduced speed so as to lower to a height corresponding to the step; and
when the obstacle is the step, the step is below the ground and the maximum vertical distance to the ground is greater than or equal to the fourth threshold, determining that the working strategy of the self-moving device is to change the moving direction so as to avoid the obstacle.

8. The method according to claim 1, wherein after using pixel coordinates of the reflected light in the environment image to determine the contour information of the object acted on by the line laser, the method further comprises: determining the number of protrusions of a contour shape in the contour information;
when the number of the protrusions is greater than a number threshold, and when the contour indicated by the contour information is determined as an obstacle contour by using a non-image identification algorithm, the method determines that the object acted by the line laser is an obstacle; and when the number of the protrusions is less than or equal to the number threshold, the method determines that the contour indicated by the contour information is not an obstacle contour.

9. The method according to claim 1, wherein when the line laser hits a flat ground, a ground information extracted from the environmental image captured by the image acquisition component is flat and smooth; and when the obstacle is a carpet and the line laser hits the carpet, a ground information extracted from the environmental image captured by the image acquisition component is irregular data with noise.

10. An obstacle identification apparatus, the obstacle identification apparatus being used in a self-moving device on which a first line laser emitter and an image acquisition component are installed; the first line laser emitter being adapted to emit line laser obliquely and downwardly along a moving direction; the image acquisition component being adapted to collect an environmental image including reflected light obtained by the line laser reflected by an object; the apparatus comprising:
an image acquisition module adapted to acquire the environment image sent by the image acquisition component;
a contour determination module adapted to use pixel coordinates of the reflected light in the environmental image to determine contour information of the object acted on by the line laser; and
an object identification module adapted to determine that the object acted on by the line laser is an obstacle when a contour indicated by the contour information is an obstacle contour.

11. An obstacle identification apparatus, wherein the obstacle identification apparatus comprises a processor and a memory; a program is stored in the memory, and the program is loaded and executed by the processor to realize an obstacle identification method according to any one of claims 1 to 9.

12. A computer-readable storage medium, wherein a program is stored in the storage medium; and wherein when the program is executed by a processor, it is used to implement an obstacle identification method according to any one of claims 1 to 9.

13. A self-moving device, comprising: a shell, a first line laser emitter, an image acquisition component and a control component; the first line laser emitter being disposed on the shell, and being adapted to emit line laser obliquely and downwardly along a moving direction; the image acquisition component being adapted to collect an environmental image comprising reflected light obtained by the line laser reflected by an object; the first line laser emitter and the image acquisition component being respectively connected in communication with the control component, the control component being adapted to:
acquire the environment image sent by the image acquisition component;
use pixel coordinates of the reflected light in the environment image to determine contour information of the object acted on by the line laser; and
determine that the object acted on by the line laser is an obstacle when a contour indicated by the contour information is an obstacle contour.

14. The self-moving device according to claim 13, further comprising a second line laser emitter, the second line laser emitter being adapted to emit another line laser, an emission direction of the another line laser being different from an emission direction of the line laser; the environmental image also comprising reflected light obtained by the another line laser reflected by the object.
